# EUROPEAN PATENT SPECIFICATION

(11) **EP 3 395 013 B1**
(45) Date of publication and mention of the grant of the patent: **02.09.2020**
(21) Application number: 17857671.6
(22) Date of filing: 27.12.2017
(51) Int. Cl.: H04L 12/24, H04W 4/50, H04W 84/22

(54) **NODE UPGRADING METHOD AND SYSTEM IN MESH NETWORK**
KNOTENAUFRÜSTUNGSVERFAHREN UND SYSTEM IN EINEM MESH-NETZWERK
PROCÉDÉ ET SYSTÈME DE MISE À NIVEAU DES NOEUDS DANS UN RÉSEAU MAILLÉ

(30) Priority: 12.01.2017 CN 201710028083
(43) Date of publication of application: 31.10.2018
(73) Proprietor: Telink Semiconductor (Shanghai) Co., LTD., Shanghai 201203 (CN)
(72) Inventor: JIANG, Guohua, Shanghai 201203 (CN); SHANG, Qifa, Shanghai 201203 (CN); JIN, Haipeng, Shanghai 201203 (CN); ZHENG, Mingjian, Shanghai 201203 (CN)
(74) Representative: Manitz Finsterwald Patent- und Rechtsanwaltspartnerschaft mbB
(86) International application number: PCT/CN2017/118878
(87) International publication number: WO 2018/130071

(56) References cited:
- EP-A1- 2 661 050
- CN-A- 1 457 201
- CN-A- 101 512 977
- CN-A- 104 834 540
- CN-A- 106 713 047
- US-A1- 2008 259 844

## Description

### TECHNICAL FIELD

The present invention relates to communications, and more particularly, to a method and system for upgrading nodes in a mesh network.

### BACKGROUND

Mesh network is a network where data and control instructions are communicated by dynamic routing or broadcasting among network nodes, wherein the network nodes can be intelligent lighting bulbs or lamps, intelligent home nodes, intelligent city nodes, sensor network nodes, or other internet of things equipment. For example, in case of Bluetooth Low Energy Mesh), one of the most important applications is the intelligent home or intelligent building lighting system, wherein the data transmission of the network is realized by broadcasting, and there may be hundreds or thousands of nodes in a network, including smart bulbs, smart switches, sensors, and so on. In the prior art, in order to upgrade nodes in a mesh network, it is necessary to connect a control device (such as, a smart phone, and etc.) with the nodes in the mesh network, and then update those nodes one by one.

The inventors of the present invention have found that there are at least the following problems in the prior art: due to the fact that each node in the mesh network can only be upgraded one by one, the time required for upgrading a network increases linearly as the number of network nodes increases. In a network which includes hundreds or thousands of nodes, the upgrading efficiency thereof will be very low, and thereby the size of the mesh network will be limited.

US 2008/259844 A1 discloses techniques for over the air (OTA) microcontroller flash memory updates.

### SUMMARY

The present invention provides a node upgrading method and system in a mesh network so that the upgrade time of nodes in the mesh network can be shortened and the upgrade efficiency of the nodes can be improved, and at the same time, the number of nodes in the network can also be up to a scale of thousands of nodes. The invention is defined by the independent claims. Useful embodiments are set out in the dependent claims.

In order to solve the above technical problems, an embodiment of the present invention provides a node upgrading method in a mesh network, which is applied to a first node in the mesh network, the first node is any node in the mesh network, and the mesh network includes N nodes, where N is a natural number greater than 1. The node upgrading method in the mesh network comprises: the first node performing wireless firmware OTA (Over-the-Air) upgrade according to terminal instruction; the first node using a broadcast channel to simultaneously perform OTA upgrade on at least part of the second nodes in the mesh network after completion of the OTA; wherein the second node is a node other than the first node in the mesh network. Take the BLE Mesh lighting network as an example, the first node can be any bulb in the network, mobile phones or other control devices can be directly connected to the node and perform wireless firmware OTA upgrade for this first node, or transmit firmware of other nodes wirelessly to the first node. The first node upgrades all the other devices in the network at the same time by broadcasting. In some embodiments, the control device and the first node may both reside in a physical device (e.g., a gateway node), either as a control device or as a network node. For network upgrades, it is also possible to upgrade only some of the nodes, such as a lighting system, only to upgrade the Bluetooth low-power bulbs, or only to upgrade all the photosensitive sensor nodes.

Embodiments of the present invention also provide a node upgrading method in a mesh network, which is applied to a second node in a mesh network, the second node being a node other than the first node in the mesh network, the first node is any node in the mesh network, and the mesh network comprises N nodes, wherein N is a natural number greater than 1; the node upgrading method in the mesh network comprises: the second node performs an OTA by receiving an OTA upgrade command sent by the first node using a broadcast channel; when the second node fails in the OTA, it re-performs the OTA by re-receiving the OTA upgrade command.

Embodiments of the present invention also provide a node upgrading system in a mesh network, comprising: a terminal, a first node and a second node, the first node being any one of N nodes included in the mesh network, and the second node is a node other than the first node in the mesh network, wherein N is a natural number greater than 1; the terminal being operable to communicate with the first node by sending an OTA upgrade instruction to the first node; the first node being configured to perform an OTA according to a terminal instruction; the first node being further configured to simultaneously perform OTA upgrade on at least part of the second nodes in the mesh network using a broadcast channel after completion of the OTA; and the second node being configured to perform OTA after receiving the OTA upgrade instruction sent by the first node using the broadcast channel.

With respect to the prior art, in the embodiments of the present invention, the first node in the mesh network may perform OTA according to the terminal instructions, and the first node, after completing the OTA, can use the broadcast channel to simultaneously control at least part of the second nodes in the mesh network for the OTA. In this way, after a node in the mesh network is successfully upgraded, it can use the broadcast channel to control the remaining nodes to upgrade the firmware at the same time, which can shorten the upgrade time of the node and improve the efficiency of the node. Meanwhile, the upgrade time of the network node is greatly shortened, so that the number of nodes in the network can also be up to a scale of thousands of nodes, and thus greatly broadening the application scope.

Furthermore, the node upgrading method in the mesh network further comprises: after the first node uses the broadcast channel to simultaneously perform OTA upgrade on at least part of the second nodes in the mesh network, the first node or the terminal determines whether the OTA upgrade is successful for all the second nodes by reading the feedback information or the version information of the second node. If there is one or more second nodes that the OTA upgrade has not been successfully performed, then the first node uses the broadcast channel to simultaneously perform the OTA upgrade on the one or more second node in the mesh network, again.

In the embodiments of the present invention, after the OTA upgrade is carried out at the second node, the terminal can determine whether all the second nodes have been successfully OTA upgraded. In case there is one or more second nodes that are not successfully OTA upgraded, the first node may re-perform the OTA on the one or more second nodes, and thus, it is ensured that all second nodes in the mesh network can be successfully OTA upgraded.

Furthermore, the use of a broadcast channel to simultaneously perform OTA upgrade on at least part of the second nodes in the mesh network may comprise: after the first node receives a mesh network OTA start command sent by the terminal, it sends an OTA start command to at least part of the second nodes in the mesh network, the start command carries information and device type information of a firmware to be upgraded, wherein the information of the firmware to be upgraded includes the version number information of the firmware and the index number information of the firmware packet; the first node sends the firmware packet to at least part of the second nodes in the mesh network, and there are a plurality of the firmware packets; the first node sends an OTA end command to at least part of the second nodes in the mesh network, the end command carries the firmware length information, the number of firmware packets, and the check value information of the firmware. In the embodiments of the present invention, the first node sends an OTA start command, a firmware packet, and an OTA end command to at least part of the second nodes in the mesh network to perform the OTA upgrade on the second node so that it is more convenient and feasible for all the above nodes in the mesh network to perform OTA.

Furthermore, after the first node sends an OTA end command to at least part of the second nodes in the mesh network, it further comprises: the first node sends an OTA read end command to at least part of the second nodes in the mesh network; the first node resends the OTA end command and the OTA read end command to the second node according to the read end feedback information sent by the second node; the first node sends an OTA read identification command to at least part of the second nodes in the mesh network; the first node resends the firmware packets unsuccessfully received by the second node and the OTA read identification command to the second node according to the read identification feedback information sent by the second node; the first node sends an OTA read check result command to at least part of the second nodes in the mesh network and receives the check result feedback information sent by the second node. The embodiments of the present invention ensure that at least part of the second nodes in the mesh network can succeed in OTA.

Furthermore, the first node resending the firmware packets unsuccessfully received by the second node and the OTA read identification command to the second node when it receives the read identification feedback information sent by the second node may comprise steps as follows. The first node receives read identification feedback information sent by the second node, the read identification feedback information carrying the receiving information of the second node on the firmware packets, wherein the receiving information identifies whether the second node has received one or more firmware packets or not in an encoded format. When the first node receives the read identification feedback information sent by the second node, it summarizes the receiving information, and resends the firmware packets unsuccessfully received by the second node and the OTA read identification command to the second node according to the summary result. In the embodiments of the present invention, the read identification feedback information sent by the second node includes receiving information that one or several packets are not successfully received in the entire firmware transmission sequence. The first node combines the packets that are not successfully received by the second node by summarizes the identification information, and resends those firmware packets that are not successfully received by the second node and OTA read identification command to the second node by broadcasting. In this way, when resending a firmware packet that has not been successfully received by the second node, the first node can determine which part of the packet is not received successfully based on the feedback information, and thus, the first node can send only those packets that are not successfully received without having to re-send the entire packet required for the upgrade.

It is to be understood that both the foregoing general description and the following detailed description are exemplary and explanatory only and are not restrictive of the present disclosure.

### BRIEF DESCRIPTION OF THE DRAWINGS

Figure 1 is a structure diagram of a node upgrading system in a mesh network according to a first embodiment of the present invention;
Figure 2 is a flow chart of a node upgrading method in a mesh network according to the first embodiment of the present invention;
Figure 3 is a flow chart of a node upgrading method in a mesh network according to a second embodiment of the present invention;
Figure 4 is a flow chart of a node upgrading method in a mesh network according to a third embodiment of the present invention;
Figure 5 is a structure diagram of a node upgrading system in a mesh network according to a fourth embodiment of the present invention.

### DETAILED DESCRIPTION

To clarify the purpose, technical solutions and advantages of the present invention, the embodiments of the present invention will be described in detail with reference to the accompanying drawings. However, it will be understood by those of ordinary skill in the art that many technical details have been provided for better understanding of the present application. However, even without these technical details and variations and modifications based on the following embodiments, the technical solutions of the present application can also be implemented.

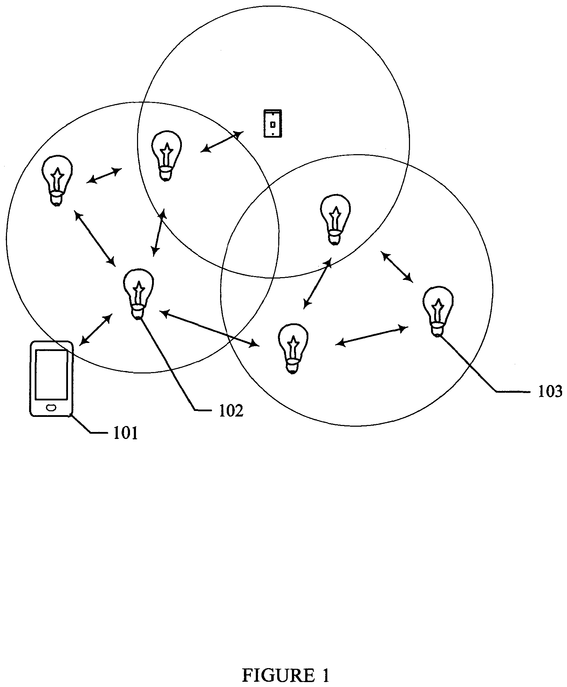

The first embodiment of the present invention relates to a node upgrading method in a mesh network applied to a first node 102 in a mesh network as shown in Fig. 1. Specifically, the mesh network includes a control terminal 101, a first node 102 and a second node 103, wherein the first node 101 is any one of the N nodes included in the mesh network, and the second node is a node other than the first node in the mesh network, and wherein N is a natural number greater than 1.

Taking the BLE Mesh lighting system as an example, as shown in Fig. 1, the terminal 101 may be a terminal device such as a smartphone or a tablet, the first node 102 may be a light bulb or any other terminal device, and the second node 103 may be a terminal device other than the first node 102 in various terminal devices of the mesh network. As shown in Fig. 1, the second node 103 may include a terminal device such as a bulb, a switch, or the like. In some cases, the terminal 101 and the first node 102 may belong to the same physical device, such as a lighting network gateway.

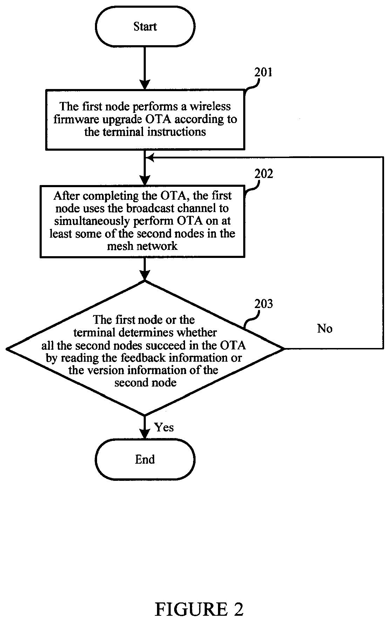

The node upgrading method in the mesh network according to the present embodiment, as shown in FIG. 2, may include steps as follows.

Step 201: the first node performs a wireless firmware OTA upgrade according to the terminal instruction.

Specifically, the terminal may send an OTA upgrade instruction to the first node, in a one-to-one way, and the first node upgrades to the new firmware according to the received terminal instruction to complete the OTA upgrade. After the first node completes the OTA upgrade, the terminal may also reconnect to the first node and confirm whether the first node is successful in the OTA upgrade by reading the firmware version number after upgrading the first node. If it is confirmed that the first node has not be successfully OTA upgraded, the terminal may re-send the OTA upgrade instruction to the first node until the first node succeeds in OTA.

For example, in a BLE Mesh network, the terminal may send a command to read the BLE attribute table (ATT table) to the first node, from the ATT table, the firmware version number after the first node upgrades can be obtained. Alternatively, the firmware version number after the first node upgrades can also be obtained by a specific mesh command, such as, an OTA version read command (CMD-OTA_ReadVer).

Step 202: The first node, after completing the OTA, uses the broadcast channel to simultaneously perform OTA upgrade on at least part of the second nodes in the mesh network.

In particular, after the first node succeeds in the OTA upgrade, the OTA upgrade command may be sent to at least part of the second nodes in the mesh network using the broadcast channel. After some of the nodes in the second node receive the OTA upgrade command sent by the first node, by multiple times of forwarding, all the second nodes can receive the OTA upgrade command and complete the OTA upgrade after receiving the OTA upgrade command. The first node may also receive the feedback information of all the second nodes to confirm the OTA upgrade status.

Step 203: The first node or the terminal determines whether all the second nodes are successful in the OTA upgrade by reading the feedback information or the version information of the second node.

Specifically, after the OTA upgrade is completed at the second node, the terminal can determine whether all the second nodes are successful in the OTA upgrade by reading the version information of all the second nodes in the mesh network, or by reading the OTA upgrade status of all the second nodes through the first node. If the result of the judgment is that there is one or more second nodes that fail in OTA upgrade, the process returns to step 202 where the first node may re-send the OTA upgrade command to the second node using the broadcast channel, wherein the second node which has been successful in OTA upgrade will ignore the OTA upgrade command, and the second node which has failed in the OTA upgrade will re-perform the OTA upgrade upon receiving the OTA upgrade command. Depending on the actual implementation, the number of times of repeated upgrades can be configured. If the result of the judgment is that all the second nodes are successful in OTA upgrade, that is, it is indicated that all nodes in the mesh network have succeeded in OTA, and then, the whole process can be ended.

With respect to the prior art, in the embodiments of the present invention, the first node in the mesh network may perform OTA according to the terminal instructions, and the first node, after completing the OTA, can use the broadcast channel to simultaneously control at least part of the second nodes in the mesh network to perform OTA. In this way, after a node in the mesh network is successfully upgraded, it can use the broadcast channel to control the remaining nodes to upgrade the firmware at the same time, which can shorten the upgrade time of the node and improve the efficiency of the node. Meanwhile, the upgrade time of the network node is greatly shortened, and the number of nodes in the network can also be up to a scale of thousands of nodes, and thereby the application scope is broadened greatly.

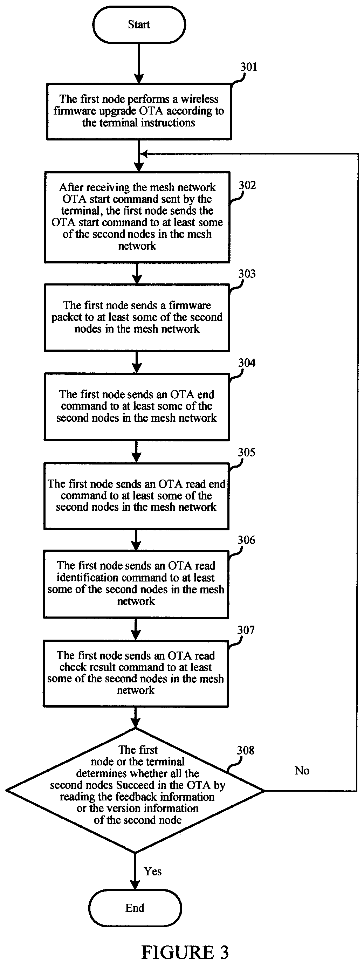

The second embodiment of the present invention relates to a node upgrading method in a mesh network. The present embodiment makes further refinement on the basis of the first embodiment, and proposes a specific implementation method in which the first node uses a broadcast channel to simultaneously perform OTA upgrade on at least part of the second nodes in the mesh network, as shown in Fig. 3, comprising steps as follows.

Step 301: the first node performs a wireless firmware OTA upgrade according to the terminal instruction.

Specifically, in a one-to-one way, the terminal may send an OTA upgrade instruction to the first node, and the first node upgrades to the new firmware according to the received terminal instruction to complete the OTA upgrade. After the OTA upgrade is completed at the first node, the terminal can also reconnect with the first node and confirm whether the first node is successful in the OTA upgrade by reading the firmware version number after upgrading the first node. If it is confirmed that the first node has not succeeded in the OTA upgrade, then the terminal may re-send the OTA upgrade instruction to the first node until the first node OTA succeeds in the OTA upgrade.

Step 302: after the first node receives the mesh network OTA start command sent by the terminal, the first node sends the OTA start command to at least part of the second nodes in the mesh network, wherein OTA start command carries the information of the firmware to be upgraded and the device type information. The information of the firmware to be upgraded includes the version number information of the firmware and the index number information of the firmware packet.

In particular, after the first node receives the mesh network OTA start command sent by the terminal, it can use the broadcast channel to send the OTA start command to at least part of the second nodes. After all the above-mentioned second nodes in the mesh network receive the OTA start command, they may determine whether the version number information of the firmware to be upgraded and the device type information carried in the start command are consistent with what they carried with their own, wherein the second nodes which carry consistent information can enter the OTA state and receive the subsequent data sent by the first node, while the second nodes which do not carry consistent information do not enter the OTA state, and do not receive the subsequent data sent by the first node.

Step 303: the first node sends the firmware packets to at least part of the second nodes in the mesh network, wherein there are a plurality of the firmware packets.

In particular, the first node may send a firmware packet to at least part of the second nodes in the mesh network using a broadcast channel, wherein each firmware packet is identified by a corresponding index number. The first node can record the index number of the firmware packet at each time a firmware packet is successfully sent until all the firmware packets have been sent. Depending on the recorded index number of the firmware packet, it is possible to ensure that all firmware packets are sent successfully. For example, the firmware is divided into 1000 packets, the index number can be numbered from 0 to 999.

After all the second nodes in the mesh network receive the firmware packets sent by the first node, according to the index number of the firmware packet, the received firmware packet is stored in a preset position. Meanwhile, the reception status of the firmware packet may be identified in the form of identification information in the identification area of the OTA area. For example, the bits in the identification area may be used to identify the reception status of the firmware packet, when a firmware packet is successfully received, and the corresponding bit of the packet in the identification area can be converted from the original 0 to 1. When all the bits of the index number corresponding to all the firmware packets in the identification area are changed from 0 to 1, all the firmware packets sent by the first node are received by the second node successfully.

It should be noted that, according to the reception status that the second node receives the firmware packet, the first node can feedback the current OTA progress information to the terminal, and each time when the OTA progress increases for a preset percentage, the first node can send the current OTA progress information to the terminal. For example, Bluetooth low power lamp needs to broadcast 1 thousand firmware packets to other nodes. Each time when 10 packets are sent, a progress of 1% is reported back to the control mobile phone, so that the mobile phone can display progress information to the user
Step 304: the first node sends an OTA end command to at least part of the second nodes in the mesh network, wherein OTA end command carries the firmware length information, the number of firmware packets, and the check value information of the firmware.

In particular, the first node sends an OTA end command to at least part of the second nodes in the mesh network, and the first node may send the current OTA progress information to the terminal according to the reception status of the second node to the OTA end command. For example, the first node can send the current OTA progress of 96% to the terminal. It should be noted that the progress is not set 100% because at this time it cannot be confirmed that all nodes are successful in OTA at that time.

Step 305: the first node sends an OTA read end command to at least part of the second nodes in the mesh network.

In particular, the first node may use the broadcast channel to send an OTA read end command to at least part of the second nodes in the mesh network, when the second node receives the OTA read end command, it sends the read end feedback information to the first node, and the first node resends the OTA end command and the OTA read end command to the second node according to the read end feedback information sent by the second node. In practical applications, in order to avoid a large amount of feedback information, the second node may send the read end feedback information to the first node without receiving the corresponding OTA end command. When the first node receives the read end feedback information sent by the second node, the first node can resend the OTA end command and the OTA read end command.

For example, after the first node sends the OTA read end command to all the second nodes in the mesh network, a node of the second nodes learns that it has not successfully received the OTA end command sent by the first node according to OTA read end command, and the node may feedback the information that it has not received the OTA end command to the first node. After receiving the feedback information of the node, the first node can resend the OTA end command and the OTA read end command to the node so as to ensure that all the second nodes have successfully received the OTA end command. When the first node has not received the feedback information of any node in the second nodes for 1.5 seconds, it is assumed that all the second nodes have successfully received the OTA end command, and then exits the OTA read end command and proceeds to the next step.

It should be noted that in this step, the first node may send the current OTA progress information to the terminal. For example, the first node can send the current OTA progress of 97% to the terminal.

Step 306: The first node sends an OTA read identification command to at least part of the second nodes in the mesh network.

In particular, the first node may send the OTA read identification command to at least part of the second nodes in the mesh network using the broadcast channel, the first node may also receive the read identification feedback information sent by the second node, and may re-send the firmware packet and the OTA read identification command which are not successfully received by the second node to the second node according to the read identification information sent by the second node. In practical applications, the second node may send read identification feedback information to the first node in case that the firmware data has not been received completely. The read identification feedback information carries the reception information of the second node to the firmware packet, wherein the reception information identifies, by coding, whether the second node has received some or a few firmware packets. The first node summarizes the reception information when receiving the read identification feedback information sent by the second node, and re-sends the firmware packet and the OTA read identification command which is not successfully received by the second node to the second node according to the summary result.

More specifically, the second node in the mesh network may determine whether the firmware packet has been successfully received by itself or not according to the number of the firmware data carried in OTA end command and the identification information in the identification area acquired in step 303. If it is determined that a certain packet or a certain number of packets is lost, the second node may send the index number information of the lost packet to the first node in the form of an encoded packet. For example, if the firmware length has a total of 10 packets, and a second node does not receive the second and eighth data packet, then the BitMap fed back is 1011111011.

When the first node receives the index information fed back by the above node, the first node merges the duplicate index numbers. For example, the feedback received by the first node from the second node A is 1011111011, the feedback from the second node B is 0111101111, then the summarized information is 0011101011, wherein the location of the 0 identifies an unsuccessful packet sent in the network. The first node re-sends the unsuccessful firmware packet and the OTA read identification command to all the second nodes through the broadcast channel until there is no any feedback for a continuous default time after the OTA read identification command is sent, and then it can be assumed that all second nodes have successfully received all the firmware packets.

For example, when the first node receives a feedback information that more than 32 packets should be re-sent, or the first node has received no feedback for 1.5 seconds, then the first node will stop receiving the feedback information of the second node and exit the present command of reading the feedback information, and re-send the firmware packet and the OTA read identification command to all the second nodes through the broadcast channel, until there is no any feedback for 1.5 seconds after the OTA read identification command is sent, and then it can be assumed that all second nodes have successfully received all the firmware packets.

It should be noted that in the above step, the first node may send the current OTA progress information to the terminal. For example, the first node can send the current OTA progress of 98% to the terminal.

Step 307: the first node sends an OTA read check result command to at least part of the second nodes in the mesh network.

Specifically, the first node may send the OTA read check result command to at least part of the second nodes in the mesh network using the broadcast channel and may receive the check result feedback information sent by the second node. In practical applications, the second node may send the check result feedback information to the first node in the case the check fails.

More specifically, after the first node sends an OTA read check result command to at least part of the second nodes in the mesh network, the aforesaid second node may calculate the local check value according to the firmware length information carried in OTA end command and the received firmware packet, and compares the calculated local check value with the check value of the firmware carried in OTA end command. When the comparison result is the same, it means that the check is successful. If the comparison result is different, the check fails. The second node may send the check result feedback information to the first node in the case the check fails.

It should be noted that in this step, the first node may send the current OTA progress information to the terminal. For example, the first node can send the current OTA progress of 99% to the terminal.

In the embodiments of the present invention, if the second node in the mesh network is successful in the check, a certain state may be displayed, for example, a Bluetooth low power lamp may slowly flashes for a certain amount of time. If the second node fails in the check, another status can be displayed, for example, quick flashing for a certain amount of time. Regardless of whether the second node is successful in the check, after the check, the second node will be started for OTA, and then the node which succeeds in the check will run the new firmware, and the node which fails will still run the old firmware.

In the embodiments of the present invention, if the first node did not receive the check information feedback for continuous preset time, then it is assumed that all the second nodes have completed the feedback, and meanwhile the first node exits the process of reading the result of the check value, and continues to wait for the OTA instruction and the restart time. At this time, the first node may send the current OTA progress of 100% to the terminal to 100%.

Step 308: the first node or the terminal determines whether all the second nodes are successful in OTA by reading the feedback information or the version information of the second node.

Specifically, after the second node completes the OTA upgrade, the terminal may determine whether all the second nodes are successful in OTA by reading the version information of all the second nodes in the mesh network or reading the OTA upgrade status of all the second nodes through the first node. If the determination result indicates that there is a second node fails in OTA, then the process returns to step 302, and the first node may re-send the OTA upgrade command to the second node using the broadcast channel. The second node which has been successful in OTA will ignore the OTA upgrade command, while the second node which has failed in OTA re-performs the OTA after receiving the OTA upgrade command. Depending on the actual implementation, the number of times of repeated upgrades can be configured. If the result of the determination indicates that all the second nodes are successful in OTA, it actually indicates that all nodes in the mesh network have succeeded in OTA, and then the whole process can be ended.

In the present embodiment, the first node performs an OTA on all the second nodes by sending an OTA start command, a firmware packet, and an OTA end command to at least part of the second nodes in the mesh network, and it is more convenient and feasible for all nodes in the mesh network to perform OTA. After the OTA upgrade is carried out on all the second nodes, the terminal can determine whether all the second nodes have succeeded in OTA, In the case there is one or more second nodes failed in OTA, the first node may re-perform the OTA on the second node, and this ensures that all the second nodes in the mesh network succeed in OTA.

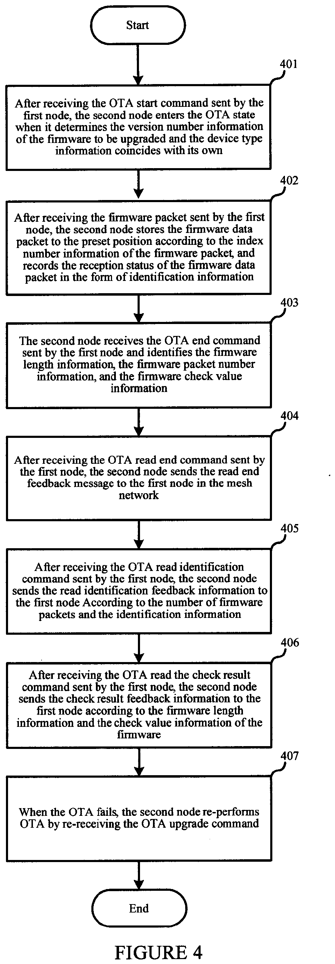

The third embodiment of the present invention relates to a node upgrading method in a mesh network. The upgrading method is applied to the second node in the mesh network, wherein the second node is a node other than the first node in the mesh network. The first node may be any node in the mesh network, and the mesh network includes N nodes, where N is a natural number greater than one. The specific flow of the node upgrading method in the mesh network is shown in Figure 4, including steps as described as follows.

Step 401: after the second node receives the OTA start command sent by the first node, the second node enters OTA state when it is determined that the version number information of the firmware to be upgraded and the device type information coincide with what it carries with its own, wherein OTA start command carries the information of the firmware to be upgraded and device type information. The information of the firmware to be upgraded includes the version number information of the firmware and the index number information of the firmware packet.

Specifically, after all the second nodes in the mesh network receive the OTA start command, they may determine whether the version number information of the firmware to be upgraded and the device type information carried in the start command are consistent with what they carried with their own, wherein the second nodes which carry consistent information can enter the OTA state and receive the subsequent data sent by the first node, while the second nodes which do not carry consistent information do not enter the OTA state, and do not receive the subsequent data sent by the first node.

Step 402: after the second node receives the firmware packet sent by the first node, the firmware packet is stored in a preset position according to the index number information of the firmware packet carried in OTA start command and the receipt status of the firmware packet is recorded in the form of identification information.

For example, the bits in the identification area may be used to identify the reception status of the firmware packet, when a firmware packet is successfully received, the corresponding bit of the packet in the identification area may be converted from the original 0 to 1. When all the bits of the index number corresponding to all the firmware packets in the identification area are changed from 0 to 1, all the firmware packets sent by the first node are received by the second node successfully.

Step 403: the second node receives the OTA end command sent by the first node, and identifies the firmware length information, the number of firmware packets, and the check value information of the firmware carried in OTA end command.

Step 404: after the second node receives the OTA read end command sent by the first node, the second node sends the read end feedback information to the first node in the mesh network.

Specifically, after receiving the OTA read end command sent by the first node, the second node sends the read end command feedback information to the first node. In a practical application, in order to avoid a large amount of feedback information, the second node may send the read end feedback information to the first node only, without receiving the corresponding OTA end command. When the first node receives the read end feedback information sent by the second node, the first node can resend the OTA end command and the OTA read end command.

Step 405: after receiving the OTA read identification command sent by the first node, the second node sends the read identification feedback information to the first node based on the firmware packet number information and the identification information.

Specifically, after the second node receives the OTA read identification command sent by the first node, it may send the read identification feedback information to the first node according to the number of firmware packets and the identification information carried in OTA end command. In a practical application, the second node may send read identification feedback information to the first node only in the case that the firmware data is not received intact.

More specifically, the second node may determine whether or not to successfully receive the firmware packet according to the number of the firmware data carried in OTA end command and the identification information in the identification area acquired in step 402. If the result of the determination is that a certain packet or a certain number of packets is lost, the aforesaid node may send the index number information of the lost packet to the first node in the form of an encoded packet. For example, if the firmware length has a total of 10 packets, a node does not receive the second and eighth data packet, the feedback BitMap is 1011111011.

Step 406: the second node, after receiving the OTA read check result command sent by the first node, sends the check result feedback information to the first node based on the firmware length information and the check value information of the firmware.

Specifically, after receiving the OTA read check result command sent by the first node, the second node may calculate the local check value according to the firmware length information and firmware checksum information carried in OTA end command, and compares the calculated local check value with the check value of the firmware carried in OTA end command. When the comparison result shows they are the same, it means that the check is successful. If the comparison result shows they are different, then the check fails. In practical applications, the second node may send the check result feedback information to the first node only in case that the check fails.

In the embodiments of the present invention, if the check for the second node in the mesh network is successful, a certain state may be displayed, for example, a Bluetooth low power lamp slow flashes for a certain amount of time. If the second node fails in the check, another status can be displayed, for example, quick flashing for a certain amount of time. Regardless of whether the second node is successful in the check, after the check, the second node will perform an OTA restart operation. The nodes which succeed in the check will run the new firmware, and the nodes which fail in the check will still run the old firmware.

Step 407: the second node re-performs the OTA by re-receiving the OTA upgrade command when it fails in the OTA.

Specifically, after the second node completes the OTA upgrade, the terminal may determine whether all the second nodes are successful in the OTA by reading the version information of all the second nodes in the mesh network or reading the OTA upgrade status of all the second nodes through the first node. If the result of the determination is that there is a second node fails in the OTA, all the second nodes may receive the OTA upgrade command sent by the first node again, wherein the second nodes which have been successful in OTA will ignore the OTA upgrade command, and the second nodes which have failed in OTA re-perform the OTA after receiving the OTA upgrade command again.

In the present embodiment, all the second nodes in the mesh network perform OTA by receiving the OTA start command, the firmware packet, and the OTA end command sent by the first node. Also, when one of the second nodes has lost a packet, the OTA can be re-performed, making it easier for all nodes in the mesh network to perform OTA. After the OTA is performed on all the second nodes, the second nodes that failed the OTA can re-perform the OTA by receiving the OTA upgrade command again. This ensures that all second node OTAs in the mesh network succeed in the OTA.

It is not difficult to find that the present embodiment is an embodiment of a node upgrading method in a mesh network applied to a second node corresponding to the second embodiment, and the present embodiment can be implemented in cooperation with the second embodiment. The related technical details mentioned in the second embodiment are still valid in the present embodiment, and the repetition thereof is not repeated here. Accordingly, the related technical details mentioned in the present embodiment can also be applied in the second embodiment.

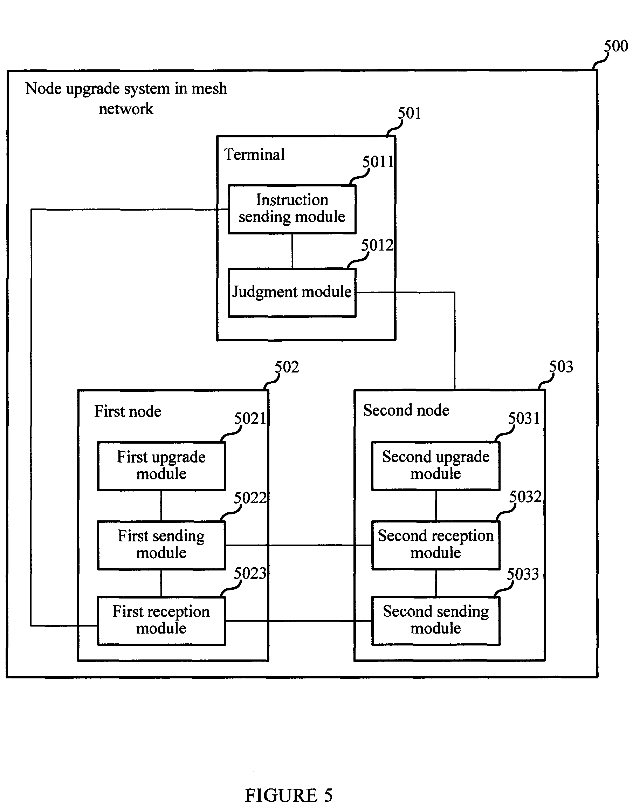

The fourth embodiment of the present invention relates to a node upgrading system in a mesh network, as shown in Fig. 5, the node upgrading system 500 in the mesh network includes a terminal 501, a first node 502 and a second node 503, the first node 502 is any node among the N nodes included in the mesh network, the second node 503 is a node other than the first node in the mesh network, wherein N is a natural number greater than 1.

The terminal 501 is used to communicate with the first node 502 by sending an OTA upgrade instruction to the first node 502. Specifically, in a one-to-one way, the terminal 501 may send an OTA upgrade instruction to the first node 502, and the first node 502 upgrades to the new firmware according to the received terminal instruction, so as to complete the OTA upgrade. After the OTA upgrade is completed at the first node 502, the terminal 501 can also reconnect the first node 502 and confirm whether the first node 502 is successful in the OTA by reading the firmware version number after upgrading the first node 502. If it is confirmed that the first node 502 has not succeeded in the OTA, the terminal may re-send the OTA upgrade instruction to the first node 502 until the first node 502 succeeds in the OTA.

The first node 502 is used to perform OTA according to the instructions of the terminal 501, and the first node 502 is also used to simultaneously perform OTA upgrade on at least part of the second nodes 503 in the mesh network using the broadcast channel after the completion of OTA.

The second node 503 performs the OTA after receiving the OTA upgrade command sent by the first node 502 via the broadcast channel.

In the embodiment of the present invention, the terminal 501 may include an instruction sending module 5011 and a judgment module 5012.

The instruction sending module 5011 is configured to send the OTA upgrade instruction to the first node 502.

The judgment module 5012 is configured to determine whether all the second nodes 503 succeed in the OTA by reading the version information of the second node 503 after the first node 502 uses the broadcast channel to simultaneously perform the OTA upgrade on at least part of the second nodes 503 in the mesh network. If there is a second node 503 that has not succeeded in OTA, the instruction sending module 5012 may be further configured to re-send the OTA instruction to the first node 502.

In the embodiments of the present invention, the first node 502 may include a first upgrade module 5021, a first sending module 5022, and a first reception module 5023.

The first upgrade module 5021 is configured to perform OTA according to the instruction from the terminal 501. Specifically, the first upgrade module 5021 of the first node may upgrade to the new firmware according to the terminal command received by the first receiving module 5023 to complete the OTA upgrade.

The first sending module 5022 is configured to simultaneously send an OTA upgrade instruction to at least part of the second nodes 503 in the mesh network using the broadcast channel, after completion of the OTA.

The first receiving module 5023 is configured to receive the OTA upgrade instruction sent by the terminal 501 and further configured to receive the feedback information sent by the second node 503 after receiving the OTA instruction.

In the embodiments of the present invention, the second node 503 may include a second upgrade module 5031, a second reception module 5032, and a second sending module 5033.

The second upgrade module 5031 is configured to perform the OTA upon receiving the OTA upgrade instruction sent by the first node 502.

The second receiving module 5032 is configured to receive an OTA upgrade instruction sent by the first node 502.

The second sending module 5033 is configured to send the feedback information to the first node 502 upon receiving the OTA upgrade instruction sent by the first node 502.

When compared with the prior art, in the embodiments of the present invention, the first node in the mesh network may perform OTA according to the terminal instructions, and the first node, after completing the OTA of itself, can use the broadcast channel to simultaneously control at least part of the second nodes in the mesh network to perform the OTA. In this way, after a node in the mesh network is successfully upgraded, it can use the broadcast channel to control the remaining nodes to upgrade the firmware at the same time, which can shorten the upgrade time of the nodes and improve the efficiency of the nodes. Meanwhile, the upgrade time of the network node is greatly shortened, so that the number of nodes in the network can also be up to a scale of thousands of nodes, and thereby the application scope is broadened greatly.

It is not difficult to find that the present embodiment is a system embodiment corresponding to the first embodiment, and the present embodiment can be implemented in cooperation with the first embodiment. The related technical details mentioned in the first embodiment are still valid in the present embodiment, and the repetition thereof is not repeated here. Accordingly, the related technical details mentioned in the present embodiment can be applied to the first embodiment.

## Claims

1. A node upgrading method in a mesh network, **characterized in that** the method is applied to a first node (102, 502) in the mesh network, the first node (102, 502) is any node in the mesh network, and the mesh network includes N nodes, where N is a natural number greater than 1;
the node upgrading method in the mesh network comprising:
performing (201) wireless firmware Over-the-Air (OTA) upgrade by the first node (102, 502) according to instructions from a terminal (101, 501);
simultaneously performing (202) OTA upgrade on at least part of second nodes (103, 503) in the mesh network by the first node (102, 502) using a broadcast channel, after completion of the wireless firmware OTA upgrade, wherein a second node (103, 503) is a node other than the first node (102, 502) in the mesh network.

2. The node upgrading method according to claim 1, **characterized in that** the method further comprises:
after the simultaneously performing OTA upgrade on at least part of the second nodes (103, 503) in the mesh network by the first node (102, 502) using a broadcast channel, the first node (102, 502) or the terminal (101, 501) determines (203) whether the OTA upgrade is successful for all the second nodes (103, 503) by reading feedback information or version information from the second nodes (103, 503); and if there is one or more second nodes (103, 503) that the OTA upgrade is not successful, then the first node (102, 502) uses the broadcast channel to simultaneously perform the OTA upgrade again on the one or more second nodes (103, 503) in the mesh network.

3. The node upgrading method according to claim 2, **characterized in that** the simultaneously performing OTA upgrade on at least part of the second nodes (103, 503) in the mesh network by the first node (102, 502) using a broadcast channel comprises:
after the first node (102, 502) receives a mesh network OTA start command sent by the terminal (101, 501), the first node (102, 502) sending (302) an OTA start command to at least part of the second nodes (103, 503) in the mesh network, the start command carrying information and device type information of a firmware to be upgraded, wherein the information of the firmware to be upgraded includes the version number information of the firmware and the index number information of firmware packets;
the first node (102, 502) sending (303) the firmware packets to the at least part of the second nodes (103, 503) in the mesh network, and there are a plurality of the firmware packets;
the first node (102, 502) sending (304) an OTA end command to at least part of the second nodes (103, 503) in the mesh network, the end command carrying firmware length information, number of firmware packets, and check value information of the firmware.

4. The node upgrading method according to claim 3, **characterized in that** after the first node (102, 502) sending an OTA end command to at least part of the second nodes (103, 503) in the mesh network, the method further comprises:
the first node (102, 502) sending (305) an OTA read end command to the at least part of the second nodes (103, 503) in the mesh network; the first node (102, 502) resending the OTA end command and the OTA read end command to the second node (103, 503) according to read end feedback information sent by the second node (103, 503);
the first node (102, 502) sending (306) an OTA read identification command to the at least part of the second nodes (103, 503) in the mesh network; the first node (102, 502) resending the firmware packets that are unsuccessfully received by the second node (103, 503) and the OTA read identification command to the second node (103, 503) according to the read identification feedback information sent by the second node (103, 503);
the first node (102, 502) sending (307) an OTA read check result command to the at least part of the second nodes (103, 503) in the mesh network and receiving the check result feedback information sent by the second nodes (103, 503).

5. The node upgrading method according to claim 4, **characterized in that** the first node (102, 502) sending (306) an OTA read identification command to the at least part of the second nodes (103, 503) in the mesh network; the first node (102, 502) resending the firmware packets that are unsuccessfully received by the second node (103, 503) and the OTA read identification command to the second node (103, 503) according to the read identification feedback information sent by the second node (103, 503) comprises:
the first node (102, 502) receiving the read identification feedback information sent by the second node (103, 503); the read identification feedback information carrying receiving information of the second node (103, 503) on the firmware packets; wherein the receiving information identifies whether the second node (103, 503) has received one or more firmware packets or not in an encoded format;
when the first node (102, 502) receives the read identification feedback information sent by the second node (103, 503), the first node (102, 502) summarizing the receiving information, and resending the firmware packets unsuccessfully received by the second node (103, 503) and the OTA read identification command to the second node (103, 503) according to a summary result.

6. A node upgrading method in a mesh network, **characterized in that** the method is performed by a second node (103, 503) in the mesh network, the second node (103, 503) being a node other than a first node (102, 502) in the mesh network, the first node (102, 502) being any node in the mesh network, and the mesh network including N nodes, wherein N is a natural number greater than 1;
the node upgrading method in the mesh network comprising:
the second node (103, 503) performing an OTA upgrade by receiving an OTA upgrade command sent by the first node (102, 502) using a broadcast channel, after the first node has completed the OTA upgrade; and
when the OTA upgrade of the second node (103, 503) fails, the second node (103, 503) re-performing (407) the OTA upgrade by re-receiving the OTA upgrade command.

7. The node upgrading method according to claim 6, **characterized in that** the second node (103, 503) performing the OTA upgrade by receiving the OTA upgrade command sent by the first node (102, 502) using a broadcast channel comprises:
after the second node (103, 503) receives the OTA start command sent by the first node (102, 502), when it is determined that the version number information of the firmware to be upgraded and the device type information carried in the OTA start command is consistent with the version number information and the device type information carried by the second node (103, 503) itself, the second node (103, 503) entering (401) an OTA state;
after the second node (103, 503) receives the firmware packet sent by the first node (102, 502), the second node (103, 503) storing (402) the firmware packet in a preset position according to the index number information of the firmware packet carried in the OTA start command, and recording the reception status of the firmware packet in a form of identification information;
the second node (103, 503) receiving (403) the OTA end command sent by the first node (102, 502) and identifying the firmware length information, the number of firmware packets and the check value information of the firmware carried in OTA end command.

8. The node upgrading method according to claim 7, **characterized in that** after the second node (103, 503) receiving the OTA end command sent by the first node (102, 502), the method further comprises:
the second node (103, 503) sending (404) read end feedback information to the first node (102, 502) in the mesh network after receiving the OTA read end command sent by the first node (102, 502);
after the second node (103, 503) receiving the OTA read identification command sent by the first node (102, 502), the second node (103, 503) sending (405) read identification feedback information to the first node (102, 502) according to the number of firmware packs and the identification information carried in OTA end command;
after the second node (103, 503) receiving the OTA read check result command sent by the first node (102, 502), the second node (103, 503) sending (406) the check result feedback information to the first node (102, 502) according to the firmware length information and the check value information of the firmware carried by the OTA end command.

9. The node upgrading method according to claim 8, **characterized in that** after the second node (103, 503) receiving the OTA read end command sent by the first node (102, 502), the second node (103, 503) sending the read end feedback information to the first node (102, 502) only in case that a corresponding OTA end command is not received;
after the second node (103, 503) receiving the OTA read end command sent by the first node (102, 502), the second node (103, 503) sending the read end feedback information to the first node (102, 502) only in case that firmware data is not completely received;
after the second node (103, 503) receiving the OTA read end command sent by the first node (102, 502), the second node (103, 503) sending the read end feedback information to the first node (102, 502) only in case that the check fails.

10. A node upgrading system in a mesh network, **characterized in** comprising: a terminal (101, 501), a first node (102, 502) and at least a second node (103, 503), the first node (102, 502) being any one of N nodes included in the mesh network, and the second node (103, 503) being a node other than the first node (102, 502) in the mesh network, wherein N is a natural number greater than 1;
the terminal (101, 501) being configured to communicate with the first node (102, 502) by sending an OTA upgrade instruction to the first node (102, 502);
the first node (102, 502) being configured to perform an OTA upgrade according to the OTA upgrade instruction from the terminal (101, 501); the first node (102, 502) being further configured to, after completion of the OTA upgrade, simultaneously perform OTA upgrade on at least part of the second nodes (103, 503) in the mesh network using a broadcast channel; and
the at least one second node (103, 503) being configured to perform the OTA upgrade after receiving the OTA upgrade instruction sent by the first node (102, 502) using the broadcast channel.

11. The node upgrading system according to claim 10, **characterized in that** the terminal (101, 501) comprising:
an instruction sending module (5011) configured to send an OTA upgrade instruction to the first node (102, 502);
a judgment module (5012) configured to judge whether the OTA upgrade is successful for all the second nodes (103, 503) by reading the version information of the second node (103, 503) after the first node (102, 502) uses a broadcast channel to simultaneously perform the OTA upgrade on the at least part of the second nodes (103, 503) in the mesh network; if there is one or more second nodes (103, 503) that has not been successfully OTA upgraded, the instruction sending module is further configured to resend the OTA upgrade instruction to the first node (102, 502).

12. The node upgrading system according to claim 10, **characterized in that** the first node (102, 502) comprises:
a first upgrade module (5021), configured to perform an OTA according to a terminal instruction;
a first sending module (5022), configured to simultaneously send an OTA upgrade instruction to the at least part of the second nodes (103, 503) in the mesh network using a broadcast channel after completion of the OTA; and
a first receiving module (5023), configured to receive an OTA upgrade instruction sent by the terminal (101, 501), and receive the feedback information sent by the second node (103, 503) after receiving the OTA upgrade instruction.

13. The node upgrading system according to claim 10, **characterized in that** the second node (103, 503) comprises:
a second receiving module (5031), configured to receive the OTA upgrade instruction sent by the first node (102, 502);
a second upgrade module (5032), configured to perform the OTA upgrade when receiving the OTA upgrade instruction sent by the first node (102, 502); and
a second sending module (5033), configured to send the feedback information to the first node (102, 502) when receiving the OTA upgrade instruction sent by the first node (102, 502).

## Patentansprüche

1. Knoten-Aktualisierungsverfahren in einem Maschennetz, **dadurch gekennzeichnet, dass** das Verfahren auf einen ersten Knoten (102, 502) in dem Maschennetz angewendet wird, der erste Knoten (102, 502) ein beliebiger Knoten in dem Maschennetz ist und das Maschennetz N Knoten enthält, wobei N eine natürliche Zahl größer als 1 ist;
wobei das Knoten-Aktualisierungsverfahren in dem Maschennetz umfasst:
Durchführen (201) einer drahtlosen Aktualisierung der Firmware Over-the-Air (OTA) durch den ersten Knoten (102, 502) gemäß Anweisungen von einem Endgerät (101, 501);
gleichzeitiges Durchführen (202) einer OTA-Aktualisierung an mindestens einem Teil von zweiten Knoten (103, 503) in dem Maschennetz durch den ersten Knoten (102, 502) unter Verwendung eines Broadcast-Kanals nach Abschluss der drahtlosen OTA-Aktualisierung der Firmware, wobei ein zweiter Knoten (103, 503) ein anderer Knoten als der erste Knoten (102, 502) in dem Maschennetz ist.

2. Knoten-Aktualisierungsverfahren nach Anspruch 1, **dadurch gekennzeichnet, dass** das Verfahren ferner umfasst, dass:
nach dem gleichzeitigen Durchführen der OTA-Aktualisierung an mindestens einem Teil der zweiten Knoten (103, 503) in dem Maschennetz durch den ersten Knoten (102, 502) unter Verwendung eines Broadcast-Kanals der erste Knoten (102, 502) oder das Endgerät (101, 501) feststellt (203), ob die OTA-Aktualisierung für alle zweiten Knoten (103, 503) erfolgreich ist, indem Rückmeldungsinformationen oder Versionsinformationen von den zweiten Knoten (103, 503) gelesen werden; und dann, wenn es einen oder mehrere zweite Knoten (103, 503) gibt, bei denen die OTA-Aktualisierung nicht erfolgreich ist, der erste Knoten (102, 502) den Broadcast-Kanal verwendet, um die OTA-Aktualisierung an dem einen oder den mehreren zweiten Knoten (103, 503) in dem Maschennetz erneut gleichzeitig durchzuführen.

3. Knoten-Aktualisierungsverfahren nach Anspruch 2, **dadurch gekennzeichnet, dass** das gleichzeitige Durchführen der OTA-Aktualisierung an mindestens einem Teil der zweiten Knoten (103, 503) in dem Maschennetz durch den ersten Knoten (102, 502) unter Verwendung eines Broadcast-Kanals umfasst, dass:
nachdem der erste Knoten (102, 502) einen von dem Endgerät (101, 501) gesendeten OTA-Startbefehl für ein Maschennetz empfangen hat, der erste Knoten (102, 502) einen OTA-Startbefehl an mindestens einen Teil der zweiten Knoten (103, 503) in dem Maschennetz sendet (302), wobei der Startbefehl Informationen über den Gerätetyp und Informationen über eine zu aktualisierende Firmware überträgt, wobei die Informationen über die zu aktualisierende Firmware Informationen über die Versionsnummer der Firmware und Informationen über die Indexnummer von Firmware-Paketen enthalten;
der erste Knoten (102, 502) die Firmware-Pakete an mindestens den Teil der zweiten Knoten (103, 503) in dem Maschennetz sendet (303), und es eine Vielzahl der Firmware-Pakete gibt;
der erste Knoten (102, 502) einen OTA-Endbefehl an mindestens einen Teil der zweiten Knoten (103, 503) in dem Maschennetz sendet (304), wobei der Endbefehl Firmware-Längeninformationen, eine Anzahl der Firmware-Pakete und Prüfwertinformationen der Firmware überträgt.

4. Knoten-Aktualisierungsverfahren nach Anspruch 3, **dadurch gekennzeichnet, dass** das Verfahren nach dem Senden eines OTA-Endbefehls durch den ersten Knoten (102, 502) an mindestens einen Teil der zweiten Knoten (103, 503) in dem Maschennetz ferner umfasst, dass:
der erste Knoten (102, 502) einen OTA-Leseende-Befehl an mindestens den Teil der zweiten Knoten (103, 503) in dem Maschennetz sendet (305); wobei der erste Knoten (102, 502) den OTA-Endbefehl und den OTA-Leseende-Befehl an den zweiten Knoten (103, 503) entsprechend der von dem zweiten Knoten (103, 503) gesendeten Leseende-Rückmeldungsinformationen erneut sendet;
der erste Knoten (102, 502) einen OTA-Lese-Identifikationsbefehl an den mindestens einen Teil der zweiten Knoten (103, 503) in dem Maschennetz sendet (306); wobei der erste Knoten (102, 502) die Firmware-Pakete, die von dem zweiten Knoten (103, 503) erfolglos empfangen werden, und den OTA-Lese-Identifikationsbefehl an den zweiten Knoten (103, 503) gemäß den von dem zweiten Knoten (103, 503) gesendeten Lese-Identifikations-Rückmeldungsinformationen erneut sendet;
der erste Knoten (102, 502) einen OTA-Lese-Prüfergebnis-Befehl an den mindestens einen Teil der zweiten Knoten (103, 503) in dem Maschennetz sendet (307) und die von den zweiten Knoten (103, 503) gesendeten Prüfergebnis-Rückmeldungsinformationen empfängt.

5. Knoten-Aktualisierungsverfahren nach Anspruch 4, **dadurch gekennzeichnet, dass** das Merkmal, dass der erste Knoten (102, 502) einen OTA-Lese-Identifikationsbefehl an den mindestens einen Teil der zweiten Knoten (103, 503) in dem Maschennetz sendet (306); wobei der erste Knoten (102, 502) die Firmware-Pakete, die von dem zweiten Knoten (103, 503) erfolglos empfangen werden, und den OTA-Lese-Identifikationsbefehl an den zweiten Knoten (103, 503) gemäß den von dem zweiten Knoten (103, 503) gesendeten Lese-Identifikations-Rückmeldungsinformationen erneut sendet, umfasst, dass:
der erste Knoten (102, 502) die von dem zweiten Knoten (103, 503) gesendeten Lese-Identifikations-Rückmeldungsinformationen empfängt; wobei die Lese-Identifikations- Rückmeldungsinformationen Empfangsinformationen des zweiten Knotens (103, 503) über die Firmware-Pakete übertragen; wobei die Empfangsinformationen identifizieren, ob der zweite Knoten (103, 503) ein oder mehrere Firmware-Pakete in einem codierten Format empfangen hat oder nicht;
wenn der erste Knoten (102, 502) die von dem zweiten Knoten (103, 503) gesendeten Lese-Identifikations-Rückmeldungsinformationen empfängt, der erste Knoten (102, 502) die empfangenen Informationen zusammenfasst und die von dem zweiten Knoten (103, 503) erfolglos empfangenen Firmware-Pakete und den OTA-Lese-Identifikationsbefehl entsprechend einem Ergebnis der Zusammenfassung erneut an den zweiten Knoten (103, 503) sendet.

6. Knoten-Aktualisierungsverfahren in einem Maschennetz, **dadurch gekennzeichnet, dass** das Verfahren durch einen zweiten Knoten (103, 503) in dem Maschennetz durchgeführt wird, wobei der zweite Knoten (103, 503) ein anderer Knoten als ein erster Knoten (102, 502) in dem Maschennetz ist, der erste Knoten (102, 502) ein beliebiger Knoten in dem Maschennetz ist und das Maschennetz N Knoten enthält, wobei N eine natürliche Zahl größer als 1 ist;
wobei das Knoten-Aktualisierungsverfahren in dem Maschennetz umfasst, dass:
der zweite Knoten (103, 503) eine OTA-Aktualisierung durchführt, indem er einen OTA-Aktualisierungsbefehl empfängt, der von dem ersten Knoten (102, 502) unter Verwendung eines Broadcast-Kanals gesendet wird, nachdem der erste Knoten die OTA-Aktualisierung abgeschlossen hat; und
wenn die OTA-Aktualisierung des zweiten Knotens (103, 503) fehlschlägt, der zweite Knoten (103, 503) die OTA-Aktualisierung erneut durchführt (407), indem er den OTA-Aktualisierungsbefehl erneut empfängt.

7. Knoten-Aktualisierungsverfahren nach Anspruch 6, **dadurch gekennzeichnet, dass** das Merkmal, dass der zweite Knoten (103, 503) die OTA-Aktualisierung durchführt, indem er den OTA-Aktualisierungsbefehl empfängt, der von dem ersten Knoten (102, 502) unter Verwendung eines Broadcast-Kanals gesendet wird, umfasst:
nachdem der zweite Knoten (103, 503) den von dem ersten Knoten (102, 502) gesendeten OTA-Startbefehl empfangen hat, wenn festgestellt wird, dass die Versionsnummerninformationen der zu aktualisierenden Firmware und die in dem OTA-Startbefehl übertragenen Gerätetypinformationen mit den Versionsnummerninformationen und den von dem zweiten Knoten (103, 503) selbst übertragenen Gerätetypinformationen übereinstimmen, der zweite Knoten (103, 503) in einen OTA-Zustand eintritt (401);
nachdem der zweite Knoten (103, 503) das von dem ersten Knoten (102, 502) gesendete Firmware-Paket empfangen hat, der zweite Knoten (103, 503) das Firmware-Paket in einer voreingestellten Position gemäß den Indexnummerninformationen des Firmware-Pakets speichert (402), die in dem OTA-Startbefehl übertragen werden, und den Empfangsstatus des Firmware-Pakets in einer Form von Identifikationsinformationen aufzeichnet;
der zweite Knoten (103, 503) den von dem ersten Knoten (102, 502) gesendeten OTA-Endbefehl empfängt (403) und die Firmware-Längeninformationen, die Anzahl der Firmware-Pakete und die Prüfwertinformationen der Firmware identifiziert, die in dem OTA-Endbefehl übertragen werden.

8. Knoten-Aktualisierungsverfahren nach Anspruch 7, **dadurch gekennzeichnet, dass** das Verfahren nach dem Empfang des von dem ersten Knoten (102, 502) gesendeten OTA-Endbefehls durch den zweiten Knoten (103, 503) ferner umfasst, dass:
der zweite Knoten (103, 503) Leseende-Rückmeldungsinformationen an den ersten Knoten (102, 502) in dem Maschennetz sendet (404), nachdem er den von dem ersten Knoten (102, 502) gesendeten OTA-Leseende-Befehl empfangen hat;
nachdem der zweite Knoten (103, 503) den von dem ersten Knoten (102, 502) gesendeten OTA-Lese-Identifikationsbefehl empfangen hat, der zweite Knoten (103, 503) Lese-Identifikations-Rückmeldungsinformationen an den ersten Knoten (102, 502) entsprechend der Anzahl der Firmware-Pakete und der in dem OTA-Endbefehl übertragenen Identifikationsinformationen sendet (405);
nachdem der zweite Knoten (103, 503) den von dem ersten Knoten (102, 502) gesendeten OTA-Lese-Prüfergebnis-Befehl empfangen hat, der zweite Knoten (103, 503) die Prüfergebnis-Rückmeldungsinformation an den ersten Knoten (102, 502) gemäß der Firmware-Längeninformation und der Prüfwertinformation der Firmware, die von dem OTA-Endbefehl übertragen werden, sendet (406).

9. Knoten-Aktualisierungsverfahren nach Anspruch 8, **dadurch gekennzeichnet, dass**, nachdem der zweite Knoten (103, 503) den von dem ersten Knoten (102, 502) gesendeten OTA-Leseende-Befehl empfangen hat, der zweite Knoten (103, 503) die Leseende-Rückmeldungsinformationen an den ersten Knoten (102, 502) nur in dem Fall sendet, dass ein entsprechender OTA-Endbefehl nicht empfangen wird;
nachdem der zweite Knoten (103, 503) den von dem ersten Knoten (102, 502) gesendeten OTA-Leseendebefehl empfangen hat, der zweite Knoten (103, 503) die Leseende-Rückmeldungsinformationen nur dann an den ersten Knoten (102, 502) sendet, wenn die Firmwaredaten nicht vollständig empfangen werden;
nachdem der zweite Knoten (103, 503) den von dem ersten Knoten (102, 502) gesendeten OTA-Leseendebefehl empfangen hat, der zweite Knoten (103, 503) die Leseende-Rückmeldungsinformationen nur dann an den ersten Knoten (102, 502) sendet, wenn die Prüfung fehlschlägt.

10. Knoten-Aktualisierungssystem in einem Maschennetz, **dadurch gekennzeichnet, dass** es umfasst: ein Endgerät (101, 501), einen ersten Knoten (102, 502) und mindestens einen zweiten Knoten (103, 503), wobei der erste Knoten (102, 502) ein beliebiger von N Knoten ist, die in dem Maschennetz enthalten sind, und der zweite Knoten (103, 503) ein anderer Knoten als der erste Knoten (102, 502) in dem Maschennetz ist, wobei N eine natürliche Zahl größer als 1 ist;
wobei das Endgerät (101, 501) so konfiguriert ist, dass es mit dem ersten Knoten (102, 502) kommuniziert, indem es eine OTA-Aktualisierungsanweisung an den ersten Knoten (102, 502) sendet;
wobei der erste Knoten (102, 502) so konfiguriert ist, dass er eine OTA-Aktualisierung gemäß der OTA-Aktualisierungsanweisung von dem Endgerät (101, 501) durchführt; wobei der erste Knoten (102, 502) ferner so konfiguriert ist, dass er nach Abschluss der OTA-Aktualisierung gleichzeitig eine OTA-Aktualisierung an mindestens einem Teil der zweiten Knoten (103, 503) in dem Maschennetz unter Verwendung eines Broadcast-Kanals durchführt; und
wobei der mindestens eine zweite Knoten (103, 503) so konfiguriert ist, dass er die OTA-Aktualisierung durchführt, nachdem er die von dem ersten Knoten (102, 502) über den Broadcast-Kanal gesendete OTA-Aktualisierungsanweisung empfangen hat.

11. Knoten-Aktualisierungssystem nach Anspruch 10, **dadurch gekennzeichnet, dass** das Endgerät (101, 501) umfasst:
ein Anweisungssendemodul (5011), das so konfiguriert ist, dass es eine OTA-Aktualisierungsanweisung an den ersten Knoten (102, 502) sendet;
ein Beurteilungsmodul (5012), das so konfiguriert ist, dass es beurteilt, ob die OTA-Aktualisierung für alle zweiten Knoten (103, 503) erfolgreich ist, indem es die Versionsinformationen des zweiten Knotens (103, 503) liest, nachdem der erste Knoten (102, 502) einen Broadcast-Kanal verwendet hat, um die OTA-Aktualisierung auf mindestens dem einen Teil der zweiten Knoten (103, 503) in dem Maschennetz gleichzeitig durchzuführen; wenn es einen oder mehrere zweite Knoten (103, 503) gibt, die nicht erfolgreich durch OTA aktualisiert wurden, das Anweisungssendemodul ferner konfiguriert ist, um die OTA-Aktualisierungsanweisung erneut an den ersten Knoten (102, 502) zu senden.

12. Knoten-Aktualisierungssystem nach Anspruch 10, **dadurch gekennzeichnet, dass** der erste Knoten (102, 502) umfasst:
ein erstes Aktualisierungsmodul (5021), das so konfiguriert ist, dass es eine OTA gemäß einer Endgeräteanweisung durchführt;
ein erstes Sendemodul (5022), das so konfiguriert ist, dass es gleichzeitig eine OTA-Aktualisierungsanweisung an mindestens einen Teil der zweiten Knoten (103, 503) in dem Maschennetz unter Verwendung eines Broadcast-Kanals nach Abschluss der OTA sendet; und
ein erstes Empfangsmodul (5023), das so konfiguriert ist, dass es eine von dem Endgerät (101, 501) gesendete OTA-Aktualisierungsanweisung empfängt und nach Empfang der OTA-Aktualisierungsanweisung die von dem zweiten Knoten (103, 503) gesendeten Rückmeldungsinformationen empfängt.

13. Knoten-Aktualisierungssystem nach Anspruch 10, **dadurch gekennzeichnet, dass** der zweite Knoten (103, 503) umfasst:
ein zweites Empfangsmodul (5031), das so konfiguriert ist, dass es die von dem ersten Knoten (102, 502) gesendete OTA-AktualisierungsAnweisung empfängt;
ein zweites Aktualisierungsmodul (5032), das so konfiguriert ist, dass es die OTA-Aktualisierung durchführt, wenn es die von dem ersten Knoten (102, 502) gesendete OTA-Aktualisierungsanweisung empfängt; und
ein zweites Sendemodul (5033), das so konfiguriert ist, dass es die Rückmeldeinformationen an den ersten Knoten (102, 502) sendet, wenn es die von dem ersten Knoten (102, 502) gesendete OTA-Aktualisierungsanweisung empfängt.

## Revendications

1. Procédé de mise à niveau de nœuds dans un réseau maillé, **caractérisé en ce que** le procédé est appliqué à un premier nœud (102, 502) dans le réseau maillé, le premier nœud (102, 502) est un nœud quelconque dans le réseau maillé et le réseau maillé inclut N nœuds, où N est un nombre naturel supérieur à 1 ;
le procédé de mise à niveau de nœuds dans le réseau maillé consistant à :
effectuer (201) une mise à niveau OTA (Over-the-Air) de micrologiciel sans fil par le premier nœud (102, 502) en fonction d'instructions provenant d'un terminal (101, 501) ;
effectuer simultanément (202) une mise à niveau OTA sur au moins une partie de seconds nœuds (103, 503) dans le réseau maillé par le premier nœud (102, 502) en utilisant un canal de diffusion, après achèvement de la mise à niveau OTA de micrologiciel sans fil, dans lequel un second nœud (103, 503) est un nœud autre que le premier nœud (102, 502) dans le réseau maillé.

2. Procédé de mise à niveau de nœuds selon la revendication 1, **caractérisé en ce que** le procédé consiste en outre **en ce que** :
après avoir effectué simultanément la mise à niveau OTA sur au moins une partie des seconds nœuds (103, 503) dans le réseau maillé par le premier nœud (102, 502) en utilisant un canal de diffusion, le premier nœud (102, 502) ou le terminal (101, 501) détermine (203) si la mise à niveau OTA a été effectuée avec succès sur tous les seconds nœuds (103, 503) en lisant des informations en retour ou des informations de version provenant des seconds nœuds (103, 503) ; et si la mise à niveau OTA n'a pas été effectuée avec succès sur un ou plusieurs seconds nœuds (103, 503), alors le premier nœud (102, 502) utilise le canal de diffusion pour effectuer à nouveau simultanément la mise à niveau OTA sur lesdits un ou plusieurs seconds nœuds (103, 503) dans le réseau maillé.

3. Procédé de mise à niveau de nœuds selon la revendication 2, **caractérisé en ce que** l'étape consistant à effectuer simultanément la mise à niveau OTA sur au moins une partie des seconds nœuds (103, 503) dans le réseau maillé par le premier nœud (102, 502) en utilisant un canal de diffusion consiste **en ce que** :
après que le premier nœud (102, 502) a reçu une commande de début d'OTA de réseau maillé envoyée par le terminal (101, 501), le premier nœud (102, 502) envoie (302) une commande de début d'OTA à au moins une partie des seconds nœuds (103, 503) dans le réseau maillé, la commande de début portant des informations et des informations de type de dispositif d'un micrologiciel à mettre à niveau, dans lequel les informations du micrologiciel à mettre à niveau incluent les informations de numéro de version du micrologiciel et les informations de numéro d'index des paquets de micrologiciel ;
le premier nœud (102, 502) envoie (303) les paquets de micrologiciel à ladite au moins une partie des seconds nœuds (103, 503) dans le réseau maillé, et il y a une pluralité de paquets de micrologiciel ;
le premier nœud (102, 502) envoie (304) une commande de fin d'OTA à au moins une partie des seconds nœuds (103, 503) dans le réseau maillé, la commande de fin portant des informations de longueur de micrologiciel, le nombre de paquets de micrologiciel et des informations de valeur de contrôle du micrologiciel.

4. Procédé de mise à niveau de nœuds selon la revendication 3, **caractérisé en ce qu'**après que le premier nœud (102, 502) a envoyé une commande de fin d'OTA à ladite au moins une partie des seconds nœuds (103, 503) dans le réseau maillé, le procédé consiste en outre **en ce que** :
le premier nœud (102, 502) envoie (305) une commande de fin de lecture d'OTA à au moins une partie des seconds nœuds (103, 503) dans le réseau maillé ; le premier nœud (102, 502) renvoie la commande de fin d'OTA et la commande de fin de lecture d'OTA au second nœud (103, 503) en fonction des informations en retour de fin de lecture envoyées par le second nœud (103, 503) ;
le premier nœud (102, 502) envoie (306) une commande d'identification de lecture d'OTA à ladite au moins une partie des seconds nœuds (103, 503) dans le réseau maillé ; le premier nœud (102, 502) renvoie les paquets de micrologiciel qui n'ont pas été reçus avec succès par le second nœud (103, 503) et la commande d'identification de lecture d'OTA au second nœud (103, 503) en fonction des informations en retour d'identification de lecture envoyées par le second nœud (103, 503) ;
le premier nœud (102, 502) envoie (307) une commande de résultat de contrôle de lecture d'OTA à ladite au moins une partie des seconds nœuds (103, 503) dans le réseau maillé et reçoit les informations en retour de résultat de contrôle envoyées par les seconds nœuds (103, 503).

5. Procédé de mise à niveau de nœuds selon la revendication 4, **caractérisé en ce que** l'étape au cours de laquelle le premier nœud (102, 502) envoie (306) une commande d'identification de lecture d'OTA à ladite au moins une partie des seconds nœuds (103, 503) dans le réseau maillé ; le premier nœud (102, 502) renvoie les paquets de micrologiciel qui n'ont pas été reçus avec succès par le second nœud (103, 503) et la commande d'identification de lecture d'OTA au second nœud (103, 503) en fonction des informations en retour d'identification de lecture envoyées par le second nœud (103, 503) consiste **en ce que** :
le premier nœud (102, 502) reçoit les informations en retour d'identification de lecture envoyées par le second nœud (103, 503) ; les informations en retour d'identification de lecture portent des informations de réception du second nœud (103, 503) sur les paquets de micrologiciel ; dans lequel les informations de réception identifient si le second nœud (103, 503) a reçu ou non un ou plusieurs paquets de micrologiciel dans un format codé ;
lorsque le premier nœud (102, 502) reçoit les informations en retour d'identification de lecture envoyées par le second nœud (103, 503), le premier nœud (102, 502) résume les informations de réception et renvoie les paquets de micrologiciel non reçus avec succès par le second nœud (103, 503) et la commande d'identification de lecture d'OTA au second nœud (103, 503) en fonction d'un résultat de résumé.

6. Procédé de mise à niveau de nœuds dans un réseau maillé, **caractérisé en ce que** le procédé est exécuté par un second nœud (103, 503) dans le réseau maillé, le second nœud (103, 503) étant un nœud autre qu'un premier nœud (102, 502) dans le réseau maillé, le premier nœud (102, 502) étant un nœud quelconque dans le réseau maillé, et le réseau maillé incluant N nœuds, où N est un nombre naturel supérieur à 1 ;
le procédé de mise à niveau de nœuds dans le réseau maillé consistant **en ce que** :
le second nœud (103, 503) effectue une mise à niveau OTA en recevant une commande de mise à niveau OTA envoyée par le premier nœud (102, 502) en utilisant un canal de diffusion, après que le premier nœud a achevé la mise à niveau OTA ; et
lorsque la mise à niveau OTA du second nœud (103, 503) échoue, le second nœud (103, 503) effectue à nouveau (407) la mise à niveau OTA en recevant à nouveau la commande de mise à niveau OTA.

7. Procédé de mise à niveau de nœuds selon la revendication 6, **caractérisé en ce que** l'étape au cours de laquelle le second nœud (103, 503) effectue la mise à niveau OTA en recevant la commande de mise à niveau OTA envoyée par le premier nœud (102, 502) en utilisant un canal de diffusion consiste **en ce que** :
après que le second nœud (103, 503) a reçu la commande de début d'OTA envoyée par le premier nœud (102, 502), lorsqu'il est déterminé que les informations de numéro de version du micrologiciel à mettre à niveau et les informations de type de dispositif portées dans la commande de début d'OTA sont cohérentes avec les informations de numéro de version et les informations de type de dispositif portées par le second nœud (103, 503) lui-même, le second nœud (103, 503) entre (401) dans un état OTA ;
après que le second nœud (103, 503) a reçu le paquet de micrologiciel envoyé par le premier nœud (102, 502), le second nœud (103, 503) stocke (402) le paquet de micrologiciel dans une position prédéfinie en fonction des informations de numéro d'index du paquet de micrologiciel portées dans la commande de début d'OTA, et enregistre l'état de réception du paquet de micrologiciel sous une forme d'informations d'identification ;
le second nœud (103, 503) reçoit (403) la commande de fin d'OTA envoyée par le premier nœud (102, 502) et identifie les informations de longueur de micrologiciel, le nombre de paquets de micrologiciel et les informations de valeur de contrôle du micrologiciel portés dans la commande de fin d'OTA.

8. Procédé de mise à niveau de nœuds selon la revendication 7, **caractérisé en ce qu'**après que le second nœud (103, 503) a reçu la commande de fin d'OTA envoyée par le premier nœud (102, 502), le procédé consiste en outre **en ce que** :
le second nœud (103, 503) envoie (404) des informations en retour de fin de lecture au premier nœud (102, 502) dans le réseau maillé après avoir reçu la commande de fin de lecture d'OTA envoyée par le premier nœud (102, 502) ;
après que le second nœud (103, 503) a reçu la commande d'identification de lecture d'OTA envoyée par le premier nœud (102, 502), le second nœud (103, 503) envoie (405) des informations en retour d'identification de lecture au premier nœud (102, 502) en fonction du nombre de paquets de micrologiciel et des informations d'identification portées dans la commande de fin d'OTA ;
après que le second nœud (103, 503) a reçu la commande de résultat de contrôle de lecture d'OTA envoyée par le premier nœud (102, 502), le second nœud (103, 503) envoie (406) les informations en retour de résultat de contrôle au premier nœud (102, 502) en fonction des informations de longueur de micrologiciel et des informations de valeur de contrôle du micrologiciel portées par la commande de fin d'OTA.

9. Procédé de mise à niveau de nœuds selon la revendication 8, **caractérisé en ce qu'**après que le second nœud (103, 503) a reçu la commande de fin de lecture d'OTA envoyée par le premier nœud (102, 502), le second nœud (103, 503) envoie les informations en retour de fin de lecture au premier nœud (102, 502) uniquement dans le cas où une commande de fin d'OTA correspondante n'a pas été reçue ;
après que le second nœud (103, 503) a reçu la commande de fin de lecture d'OTA envoyée par le premier nœud (102, 502), le second nœud (103, 503) envoie les informations en retour de fin de lecture au premier nœud (102, 502) uniquement dans le cas où les données de micrologiciel n'ont pas été complètement reçues ;
après que le second nœud (103, 503) a reçu la commande de fin de lecture d'OTA envoyée par le premier nœud (102, 502), le second nœud (103, 503) envoie les informations en retour de fin de lecture au premier nœud (102, 502) uniquement dans le cas où le contrôle échoue.

10. Système de mise à niveau de nœuds dans un réseau maillé, **caractérisé en ce qu'**il comprend : un terminal (101, 501), un premier nœud (102, 502) et au moins un second nœud (103, 503), le premier nœud (102, 502) étant l'un quelconque de N nœuds inclus dans le réseau maillé, et le second nœud (103, 503) étant un nœud autre que le premier nœud (102, 502) dans le réseau maillé, où N est un nombre naturel supérieur à 1 ;
le terminal (101, 501) étant configuré pour communiquer avec le premier nœud (102, 502) en envoyant une instruction de mise à niveau OTA au premier nœud (102, 502) ;
le premier nœud (102, 502) étant configuré pour effectuer une mise à niveau OTA en fonction de l'instruction de mise à niveau OTA provenant du terminal (101, 501) ; le premier nœud (102, 502) étant en outre configuré pour, après l'achèvement de la mise à niveau OTA, effectuer simultanément une mise à niveau OTA sur au moins une partie des seconds nœuds (103, 503) dans le réseau maillé en utilisant un canal de diffusion ; et ledit au moins un second nœud (103, 503) étant configuré pour effectuer la mise à niveau OTA après avoir reçu l'instruction de mise à niveau OTA envoyée par le premier nœud (102, 502) en utilisant le canal de diffusion.

11. Système de mise à niveau de nœuds selon la revendication 10, **caractérisé en ce que** le terminal (101, 501) comprend :
un module d'envoi d'instructions (5011) configuré pour envoyer une instruction de mise à niveau OTA au premier nœud (102, 502) ;
un module de jugement (5012) configuré pour juger si la mise à niveau OTA a été effectuée avec succès sur tous les seconds nœuds (103, 503) en lisant les informations de version du second nœud (103, 503) après que le premier nœud (102, 502) a utilisé un canal de diffusion pour effectuer simultanément la mise à niveau OTA sur ladite au moins une partie des seconds nœuds (103, 503) dans le réseau maillé ; si un ou plusieurs seconds nœuds (103, 503) n'ont pas été mis à niveau OTA avec succès, le module d'envoi d'instructions est en outre configuré pour renvoyer l'instruction de mise à niveau OTA au premier nœud (102, 502).

12. Système de mise à niveau de nœuds selon la revendication 10, **caractérisé en ce que** le premier nœud (102, 502) comprend :
un premier module de mise à niveau (5021), configuré pour effectuer une OTA en fonction d'une instruction du terminal ;
un premier module d'envoi (5022), configuré pour envoyer simultanément une instruction de mise à niveau OTA à ladite au moins une partie des seconds nœuds (103, 503) dans le réseau maillé en utilisant un canal de diffusion après achèvement de l'OTA ; et
un premier module de réception (5023), configuré pour recevoir une instruction de mise à niveau OTA envoyée par le terminal (101, 501) et recevoir les informations en retour envoyées par le second nœud (103, 503) après avoir reçu l'instruction de mise à niveau OTA.

13. Système de mise à niveau de nœuds selon la revendication 10, **caractérisé en ce que** le second nœud (103, 503) comprend :
un second module de réception (5031), configuré pour recevoir l'instruction de mise à niveau OTA envoyée par le premier nœud (102, 502) ;
un second module de mise à niveau (5032), configuré pour effectuer la mise à niveau OTA lors de la réception de l'instruction de mise à niveau OTA envoyée par le premier nœud (102, 502) ; et
un second module d'envoi (5033), configuré pour envoyer les informations en retour au premier nœud (102, 502) lors de la réception de l'instruction de mise à niveau OTA envoyée par le premier nœud (102, 502).
